# EUROPEAN PATENT APPLICATION

(11) **EP 4 625 564 A1**
(43) Date of publication of application: **01.10.2025**
(21) Application number: 24852351.6
(22) Date of filing: 08.08.2024
(51) Int. Cl.: H01M 10/04, H01M 10/058, H01M 10/6563, H01M 10/655, H01M 10/663, H01M 10/659, H01M 50/204

(54) **SECONDARY BATTERY AGING APPARATUS**

(30) Priority: 09.08.2023 KR 20230104013
(71) Applicant: LG Energy Solution, Ltd., Seoul 07335 (KR)
(72) Inventor: SHIN, Jong Kwang, Daejeon 34122 (KR); KIM, Hong Kyun, Daejeon 34122 (KR); DOH, Sung Kwan, Daejeon 34122 (KR); KIM, Jin Young, Daejeon 34122 (KR); KIM, Min Hong, Daejeon 34122 (KR); LEE, Woo Jun, Daejeon 34122 (KR); SHIN, Un Seop, Daejeon 34122 (KR)
(74) Representative: Goddar, Heinz J.
(86) International application number: PCT/KR2024/011745
(87) International publication number: WO 2025/033998

(57) **Abstract**

Disclosed herein relates to a secondary battery aging device for aging secondary batteries contained in a plurality of cell trays, including: a multilevel battery rack consisting of a plurality of storing parts in which cell trays are stored; and a heat pump for transferring heat to each cell tray stored in the battery rack, wherein the heat pump delivers high temperature heat to some of the plurality of storing parts and low temperature heat to other storing parts.

## Description

### [Technical Field]

The present disclosure relates to a secondary battery aging device for aging secondary batteries contained in a cell tray, characterized in that the secondary battery aging device utilizes a heat pump that generates high and low temperatures of heat, respectively, to efficiently age secondary batteries contained in a cell tray.

This application claims the benefit of priority from Korean Patent Application No. 10-2023-0104013, filed on Aug. 9, 2023, the disclosure of which are incorporated herein by reference.

### [Background]

In general, depending on the shape of the battery case, secondary batteries are classified into cylindrical batteries and prismatic batteries, in which the electrode assembly is embedded in a cylindrical or prismatic metal can, and pouch-type batteries, in which the electrode assembly is embedded in a pouch-type case of an aluminum laminated sheet, wherein the electrode assembly embedded in the battery case is a chargeable/dischargeable power generator including a positive electrode, a negative electrode, and a separator interposed between the positive electrode and the negative electrode, which is classified into a jelly-roll type, which is wound by interposing a separator between a positive electrode and a negative electrode in the form of a long sheet with an active material applied thereto, and a stack-type, in which a plurality of positive electrodes and negative electrodes of a predetermined size is stacked sequentially with a separator interposed therebetween.

In secondary batteries, an activation process is usually performed after electrolyte injection, and in the activation process, a SEI film is formed through initial charge, and then the metal debris is rapidly eluted through high temperature aging to prevent the occurrence of low voltage defect.

Since the high temperature aging is typically performed at temperatures above 60°C, the operation should be performed in a space where the temperature is kept constant.

Typically, a plurality of secondary batteries is transported in cell trays to a battery rack, and the secondary batteries are aged in the battery rack while being stored in the cell trays.

Meanwhile, secondary batteries aged at high temperatures can be aged again at room temperature after cooling down, but the process is less efficient due to the long time it takes to cool down in natural condition.

Therefore, there is a need for a battery rack with a structure that can efficiently age secondary batteries at high, low, and room temperatures.

(Patent document 1) Korean Public Patent No. 10-2015-0026994

### [Summary]

### [Technical Problem]

The present disclosure aims to provide an aging device capable of aging a secondary battery with minimal heat loss.

Furthermore, the present disclosure aims to provide an aging device capable of simultaneously aging a plurality of secondary batteries at high, low, and room temperatures to improve process efficiency.

Other objects and advantages of the present disclosure will be understood from the following description, and will become more apparent from the embodiments of the present disclosure. It will also be readily apparent that the objects and advantages of the present disclosure may be realized by the means and combinations thereof disclosed in the patent claims.

### [Technical Solution]

According to the present disclosure, a secondary battery aging device is provided for aging secondary batteries contained in a cell tray.

The secondary battery aging device includes: a multilevel battery rack consisting of a plurality of storing parts in which cell trays are stored; and a heat pump for transferring heat to each cell tray stored in the battery rack, wherein the heat pump delivers high temperature heat to some of the plurality of storing parts and low temperature heat to other storing parts.

The storing part may include: a storage body designed to be open on one side to allow insertion of the cell tray; and an opening/closing door coupled to the storage body such that the opening part is opened and closed.

The storing part may further include: a support rib coupled to an inner surface of the storage body at positions spaced apart from the bottom to support a lower part of a cell tray stored in the storage body.

The storing part may further include: a duct, both ends of which is coupled to a rear end of the storage body, respectively; and a ventilation fan provided within the duct and rotating to induce air circulation in a space within the storage body.

The storing part may further include: a heat exchange coil provided in at least one of a ceiling and a floor of the storage body to dissipate heat to a space within the storage body.

A fluid that dissipates heat into the storage body may flow within the heat exchange coil.

The heat pump may include: a circulation pipe; a coolant circulating unidirectionally within the circulation pipe; and a state change unit for compressing or expanding a coolant by being connected to the circulation pipe, wherein the coolant which undergoes a phase change through the compression and expansion may heat-exchange with the fluid.

The state change unit may include: a compression unit connected to the circulation pipe to compress an incoming coolant; and an expansion unit connected to the circulation pipe to expand the incoming coolant.

The circulation pipe includes a phase transition part where the phase transition of the coolant occurs, wherein the phase transition part may include: a condensing part for condensing coolant brought to a high temperature and high pressure state by the compression unit between the compression unit and the expansion unit, and a vaporizing part for vaporizing coolant brought to a low temperature and low pressure state by the expansion unit between the compression unit and the expansion unit.

The storing part includes a fluid pipe coupled to the heat exchange coil at both ends to be in communication with the heat exchange coil, the fluid pipe includes a heat transfer part located adjacent to the phase transition part of the circulation pipe, wherein the fluid in the fluid pipe may be in heat exchange with the coolant in the heat transfer part.

The coolant may condense and dissipate heat into a fluid in the condensing part and may absorb heat from the fluid and vaporize in the vaporizing part.

The fluid pipe may include: a main pipe including the heat transfer part; and a plurality of sub-pipes branching from the main pipe and connecting with the heat exchange coils.

The battery rack may be divided into: a high temperature aging part including a storing part receiving high temperature heat from the heat pump; and a low temperature aging part including a storing part receiving low temperature heat from the heat pump.

The storing part of the high temperature aging part may provide a high temperature environment for the cell trays stored inside, and the storing part of the low temperature aging part may provide a low temperature environment for the cell trays stored inside.

The high temperature aging part may be located at the upper part of the low temperature aging part.

The battery rack may further include a room temperature aging part that provides a room temperature environment of 20 °C to 25 °C for the stored cell trays.

One heat pump may be connected to a pair of storing parts included in the high temperature aging part and the low temperature aging part, respectively.

One heat pump may be connected to the entire storing part included in the high temperature aging part and low temperature aging part.

The high temperature aging part may be maintained at 30°C to 80°C and the low temperature aging part may be maintained at 10°C to 26°C.

### [Advantageous Effects]

According to a secondary battery aging device of the present disclosure, secondary batteries may be aged efficiently.

### [Brief Description of the Drawings]

FIG. 1 is a perspective view of a battery rack included in a secondary battery aging device of the present disclosure.
FIG. 2 illustrates a front view and a side cross-sectional view of a battery rack according to a first embodiment of the present disclosure.
FIG. 3 illustrates one of the storing parts of the battery rack of FIG. 2.
FIG. 4 illustrates any one storing part included in a secondary battery aging device according to a first embodiment of the present disclosure and a heat exchange coil included in the storing part.
FIG. 5 illustrates a fluid pipe structure coupled with a heat exchange coil.
FIG. 6 illustrates a storing part with a duct and a ventilation fan.
FIG. 7 is a simplified representation of the connection between the heat pump and the storage part.
FIG. 8 illustrates a storing part that provides a low temperature environment inside the storage body, and a heat pump connected thereto.
FIG. 9 illustrates a storing part that provides a high temperature environment inside the storage body, and a heat pump connected thereto.
FIG. 10 is a hidden line illustration of a portion of the heat exchange coil hidden by the storage body in the battery rack including the storing part of FIG. 2.
FIG. 11 illustrates a storing part included in a secondary battery aging device according to a second embodiment of the present disclosure.
FIG. 12 illustrates a storing part included in a secondary battery aging device according to a third embodiment of the present disclosure.
FIG. 13 illustrates a storing part included in a secondary battery aging device according to a fourth embodiment of the present disclosure.

### [Best Mode for Carrying out the Invention]

Hereinafter, preferred embodiments of the present disclosure will be described in detail with reference to the accompanying drawings. Prior to this, it should be noted that the terms or words used in this specification and the claims are not to be construed in their ordinary or dictionary sense, but rather in a sense and concept consistent with the technical idea of the invention, based on the principle that the inventor may properly define the concept of a term to best describe his/her invention.

Accordingly, it is to be understood that the embodiments described herein and the configurations illustrated in the drawings are only the most preferred embodiments of the disclosure and are not intended to be exhaustive of the technical ideas of the invention, and that there may be various equivalents and modifications that may be substituted for them at the time of filing.

Furthermore, in describing the invention, specific descriptions of related known configurations or features are omitted where it is determined that such detailed descriptions would obscure the essence of the invention.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a secondary battery aging device for aging secondary batteries contained in a cell tray T, characterized in that the secondary battery aging device of the present disclosure utilizes a heat pump 200 that generates high and low temperatures of heat, respectively, to efficiently age the secondary batteries contained in the cell tray T.

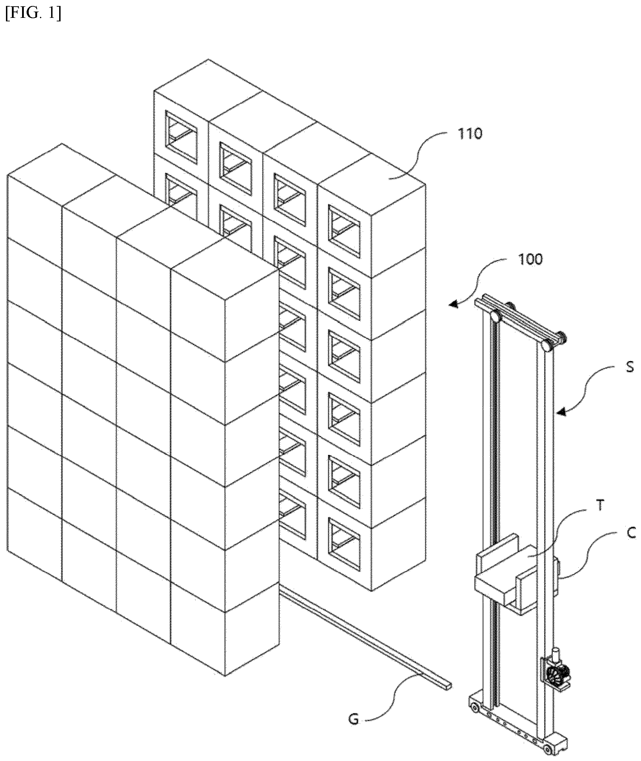

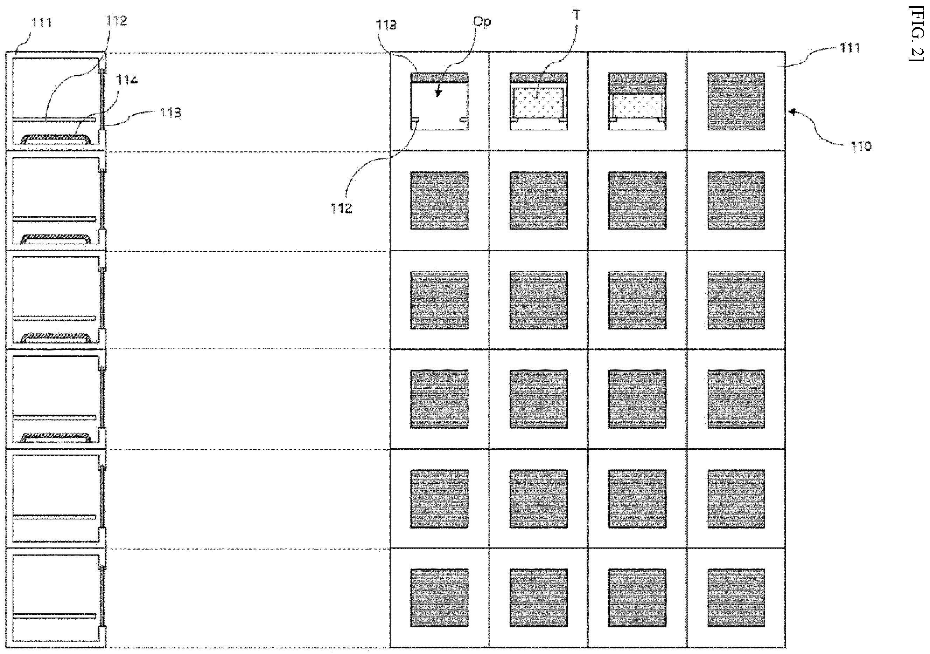

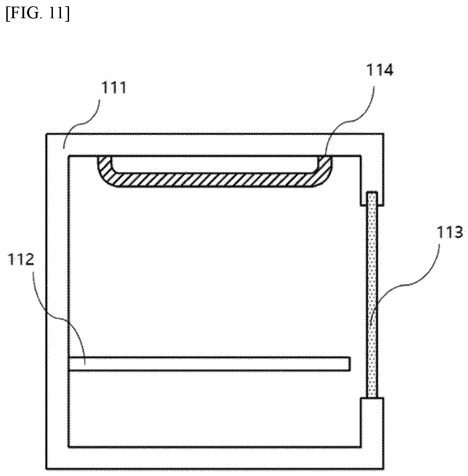

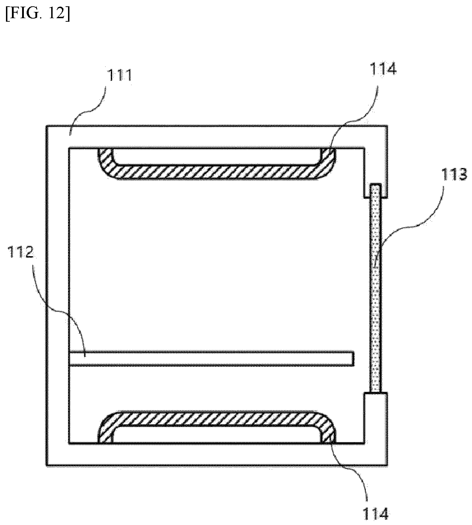

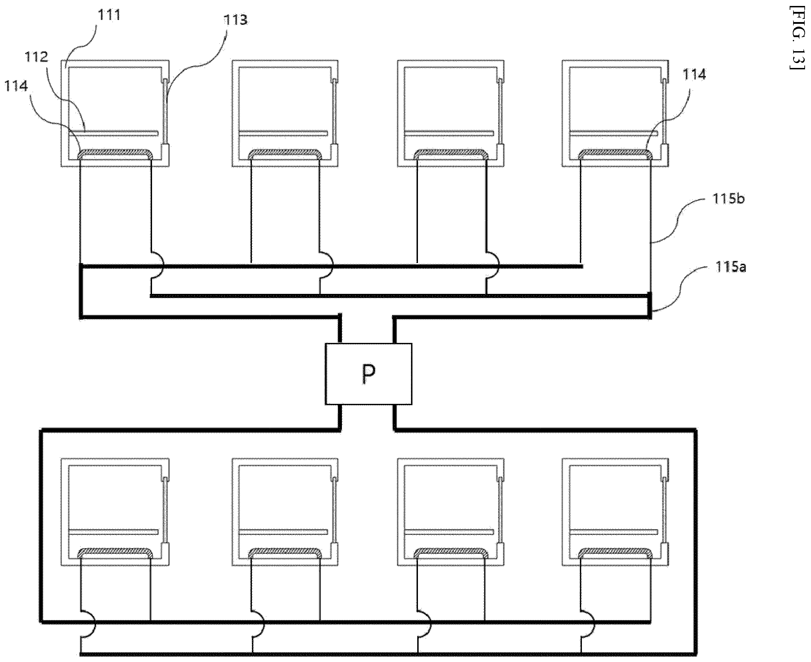

FIG. 1 relates to a secondary battery aging device of the present disclosure, FIGS. 2 through 10 relate to a secondary battery aging device according to a first embodiment of the present disclosure, FIG. 11 relates to a secondary battery aging device according to a second embodiment of the present disclosure, FIG. 12 relates to a secondary battery aging device according to a third embodiment of the present disclosure, and FIG. 13 relates to a secondary battery aging device according to a fourth embodiment of the present disclosure.

Hereinafter, specific embodiments of the secondary battery aging device of the present disclosure will be described in detail with reference to the accompanying drawings. For reference, relative positioning designations such as front to back or up and down as used in the following description are intended to aid in the understanding of the disclosure and refer to the orientation shown in the drawings unless otherwise defined.

The secondary battery aging device of the present disclosure includes a battery rack 100 comprising a plurality of storing parts 110 in which cell trays T is stored.

The cell tray T is utilized as a tool for transporting a plurality of secondary batteries, wherein the secondary batteries contained in the cell tray T may be aged while stored inside the cell tray T.

The aging can take place at high and low temperatures, or at room temperature.

FIG. 1 is a perspective view of a battery rack 100 included in a secondary battery aging device of the present disclosure.

The battery rack 100 includes a multilevel of a plurality of storing parts 110 stacked on top of each other, as shown in FIG. 1.

The secondary battery aging device includes at least one battery rack 100.

Each cell tray T may be stored into each storing part 110 by a stacker crane S.

A guide rail G may be provided between each of the battery racks 100, and the stacker crane S may be coupled to the guide rail G to be able to slide and move along the guide rail G and transport the cell trays T to the intended area.

The stacker crane S may include a carriage C that supports a lower part of the cell trays T and elevates up and down, and operates the carriage C to transport the cell trays T to storing parts 110 located at each level of the battery rack 100.

### (First embodiment)

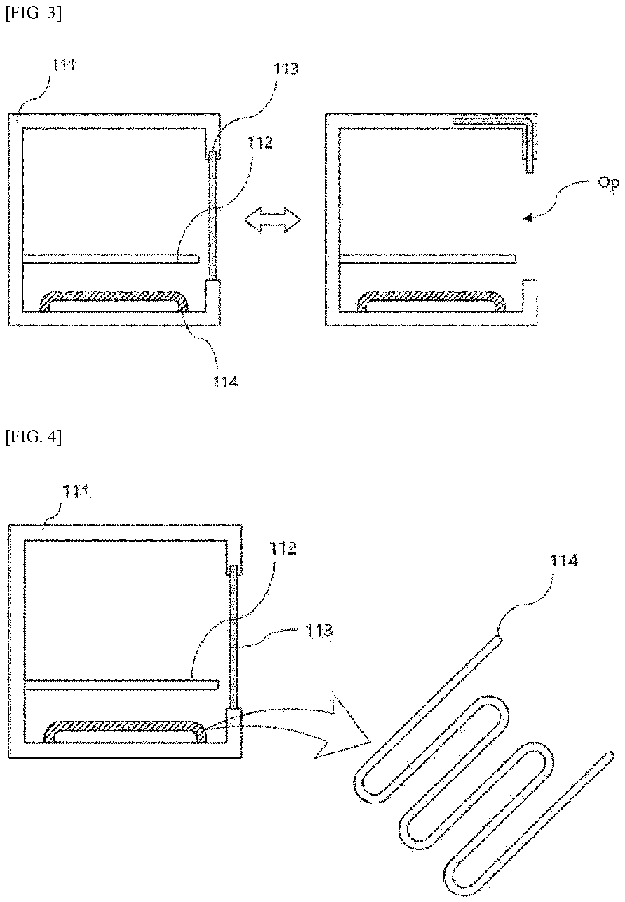

FIG. 2 illustrates a front view and side cross-sectional view of a battery rack 100 according to a first embodiment of the present disclosure, and FIG. 3 illustrates one of storing parts 110 of the battery rack 100 of FIG. 2.

The storing part 110 includes a storage body 111 designed to be open on one side for insertion of a cell tray T, as shown in FIGS. 2 and 3.

Referring to FIG. 2, each level of the battery rack 100 includes a row of storage bodies 111. A cell tray T is inserted through an opening part Op of the storage body 111, and is aged within the storage body 111.

Since a plurality of secondary batteries are stored in the cell tray T, it is desirable that all secondary batteries stored therein receive uniform heat during aging via external heat.

However, in the case of a cell tray T that is seated against the bottom of the storage body 111, less heat may be transferred to the lower part.

To address the above issue, the secondary battery aging device of the present disclosure may further include a support rib 112.

The support ribs 112 serve to support the lower part of the cell tray T, which is inserted into the storage body 111, so that the cell tray T is spaced apart from the bottom of the storage body 111.

The support ribs 112 are respectively coupled to both sides of the interior of the storage body 111 at predetermined spaced apart positions from the bottom of the storage body 111 as shown in FIGS. 2 and 3 to support the lower part of the cell tray T.

Thus, the cell tray T is supported on the support ribs 112 and can be slidably inserted into the interior of the storage body 111, wherein the inserted cell tray T is positioned a predetermined distance apart from the bottom of the storage body 111.

The storing part 110 further includes an opening/closing door 113 coupled to the storage body 111 such that the opening part Op can be opened/closed.

The opening/closing door 113 serves to isolate the space inside the storage body 111 in which the cell tray T is inserted from the outside.

The opening/closing door 113 is made at least as wide as to cover the opening part Op entirely, and is coupled with the storage body 111 so as to elevate upward and downward toward the opening part Op.

That is, the opening/closing door 113 rises toward the upper part of the opening part Op such that the opening part Op of the storage body 111 is open before the cell tray T is inserted. Conversely, the opening/closing door 113 may descend towards the opening part Op such that the opening part Op is closed after the cell tray T is inserted.

The opening/closing door 113 may be movable in a sliding manner, as shown in FIG. 3, or may be movable in a folding manner.

The storing part 110 included in the secondary battery aging device of the present disclosure includes a heat exchange coil 114 that dissipates heat.

FIG. 4 illustrates any one storing part 110 included in a secondary battery aging device according to a first embodiment of the present disclosure, and a heat exchange coil 114 included in the storing part 110.

The storing part 110 included in the secondary battery aging device according to the first embodiment of the present disclosure includes a heat exchange coil 114 at the bottom of the storage body 111. More specifically, the heat exchange coil 114 is positioned between the support ribs 112 and the bottom of the storage body 111 as shown in FIG. 4.

The heat exchange coil 114 is hollow inside, and fluid f1 flows into the hollow.

The fluid f1 moves inside the heat exchange coil 114 and dissipates heat into the storage body 111. That is, the heat exchange coil 114 acts as a medium to allow heat from the fluid f1 to be transferred into the storage body 111.

The heat transferred from the fluid f1 by the heat exchange coil 114 is evenly dissipated inside the storage body 111.

The heat exchange coil 114 can cool the cell tray T stored within the storage body 111 when the heat transferred is at a low temperature, lower than room temperature. Conversely, when the heat transferred is at a high temperature, higher than room temperature, it can heat the cell tray T stored within the storage body 111.

The heat exchange coil 114 may be in the form of a pipe bent into a zigzag shape as shown in FIG. 4. However, the heat exchange coil 114 is not limited to the shape shown and can be of any shape that effectively dissipates heat uniformly within the storage body 111.

The storing part 110 includes a fluid pipe 115 coupled to be in communication with the heat exchange coil 114.

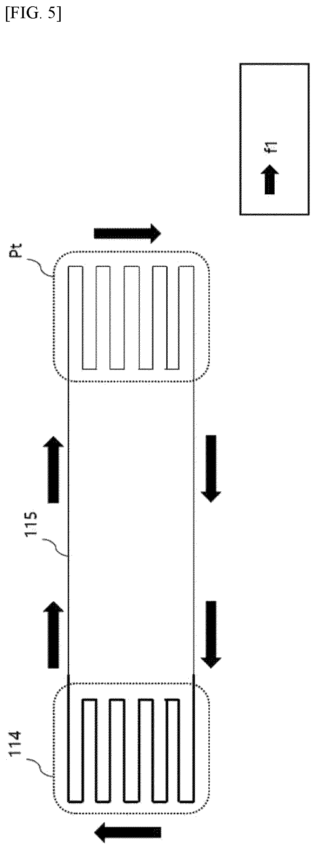

FIG. 5 illustrates a fluid pipe 115 structure coupled with a heat exchange coil 114.

The fluid pipe 115 is connected at both ends with the heat exchange coil 114, respectively, as shown in FIG. 5. Thus, the fluid f1 carries thermal energy as it travels through the fluid pipe 115, and dissipates the heat carried by the heat exchange coil 114.

The fluid pipe 115 may include a heat transfer part Pt, and the fluid f1 may absorb heat from the outside at the heat transfer part Pt, or may release heat to the outside and exchange heat. That is, fluid f1 circulating through the fluid pipe 115 and heat exchange coil 114 exchanges heat by moving through the heat transfer part Pt and heat exchange coil 114.

In the battery rack 100 of the present disclosure, when the opening/closing door 113 provided in the opening part Op is closed, unevenly heated air may stagnate in a certain place because there is no air circulation. In other words, the plurality of secondary batteries stored in the cell tray T may not receive heat uniformly due to the stagnation of the air.

Accordingly, the storing part 110 of the present disclosure may further include a ventilation fan 117 to induce air circulation so that the heat dissipated by the heat exchange coil 114 can be evenly transferred to all areas inside the storage body 111.

Specifically, the storing part 110 further includes a duct 116 coupled to the storage body 111 and a ventilation fan 117 provided within the duct 116.

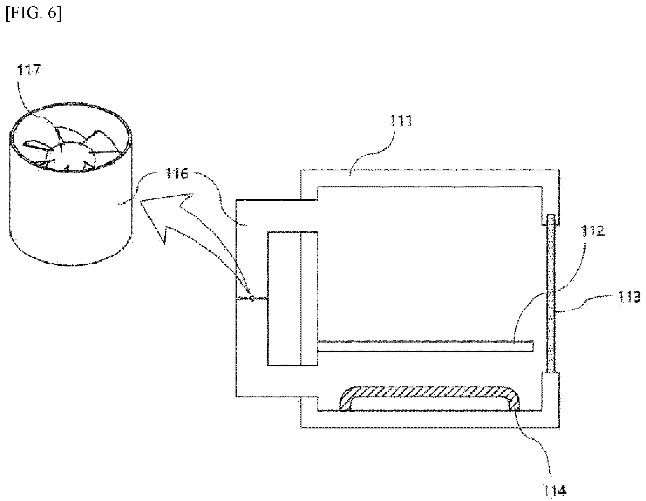

FIG. 6 illustrates a storing part 110 with a duct 116 and a ventilation fan 117.

Referring to FIG. 6, both ends of the duct 116 are respectively coupled to the rear end of the storage body 111, and a ventilation fan 117 is provided inside the duct 116 to be able to rotate.

The ventilation fan 117 rotates to generate wind along the extending direction of the duct 116.

One side of the duct 116 draws in air inside the storage body 111 by the ventilation fan 117, and the other side discharges the drawn in air back into the storage body 111.

The duct 116 and ventilation fan 117 direct air flow inside the storage body 111 in the same manner as described above.

The ventilation fan 117 mixes the air at the upper and lower parts of the storage body 111 so that the heat generated by the heat exchange coil 114 does not stagnate in either place.

The secondary battery aging device of the present disclosure includes a battery rack 100 as well as a heat pump 200 that transfers heat to each cell tray T stored in the battery rack 100.

The cell trays T stored in each storing part 110 of the battery rack 100 may be heated or cooled by a heat pump 200 connected to the battery rack 100.

The heat pump 200 is characterized in that it delivers high temperature heat to some portions of the plurality of storing parts 110 while simultaneously delivering low temperature heat to other portions of the plurality of storing parts 110.

The heat pump 200 utilizes the phase change energy of the coolant f2, which varies with compression and expansion of the coolant f2, to deliver high and low temperatures to the outside. More specifically, the heat pump 200 heat exchanges the coolant f2, which is phase changed by compression and expansion, with the fluid f1 circulating in the fluid pipe 115.

The secondary battery aging device of the present disclosure includes a heat pump 200 that delivers high temperature heat to a heat exchange coil 114 contained in one of the storing parts 110, and simultaneously delivers low temperature heat to a heat exchange coil 114 contained in another storing part 110.

Specifically, the heat pump 200 includes a circulation pipe, a coolant f2 circulating in one direction within the circulation pipe, and a state change unit 220 connected to the circulation pipe to compress or expand the coolant f2.

The secondary battery aging device of the present disclosure may include any one heat pump 200 connected to two storing parts 110 to transfer heat to the storing part 110.

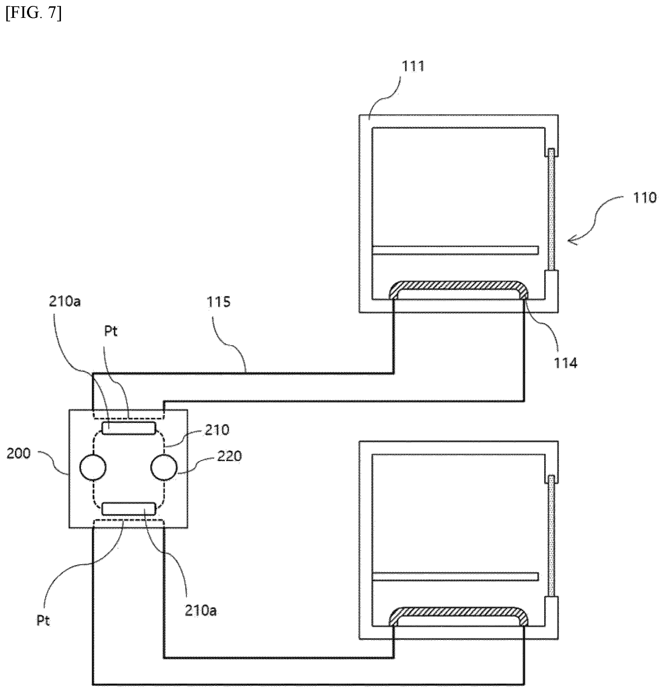

FIG. 7 is a simplified illustration of the connection between the heat pump 200 and the storing part 110.

The heat pump 200 includes a circulation pipe with coolant f2 flowing therein, as shown in FIG. 7, and on the circulation pipe are located two state change units 220 that operate in different ways.

The state change unit 220 includes a compression unit 221 for compressing the coolant f2 flowing in connection with the circulation pipe and an expansion unit 222 for expanding the coolant f2 flowing in connection with the circulation pipe.

The circulation pipe includes a phase transition part 210a where the phase transition of the coolant f2 occurs.

The phase transition part 210a includes a condensing part 210a1 for condensing the coolant f2 brought to a high temperature and high pressure state by one of the two state change units 220, and a vaporizing part 210a2 for vaporizing the coolant f2 brought to a low temperature and low pressure state by the other of the two state change units 220.

The coolant f2 condenses in the condensing part 210a1 and dissipates heat into fluid f1, and absorbs heat from fluid f1 and vaporizes in the vaporizing part 210a2.

The fluid pipe 115 included in the storing part 110 is disposed such that the heat transfer part Pt is adjacent to the phase transition part 210a of the circulation pipe, as shown in FIG. 7. Thus, the coolant f2 undergoing a state change at the phase transition part 210a is capable of exchanging heat with the fluid f1 flowing through the heat transfer part Pt.

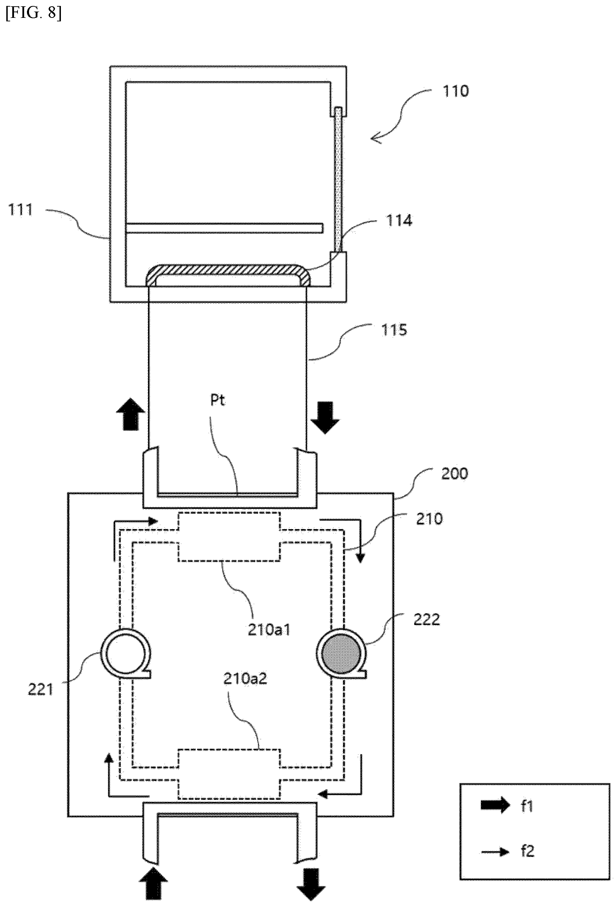

FIG. 8 illustrates a storing part 110 that provides a low temperature environment inside a storage body 111, and a heat pump 200 connected thereto.

The storing part 110 of FIG. 8 is disposed such that the heat transfer part Pt of the fluid pipe 115 is adjacent to the condensing part 210a1 of the heat pump 200.

Preferably, the coolant f2 moving through the circulation pipe moves in one direction only. Specifically, the coolant f2 moves and circulates in the following order: compression unit 221, condensing part 210a1, expansion unit 222, and vaporizing part 210a2.

In the case of FIG. 8, the coolant f2 moving in the circulation pipe circulates from the compression unit 221 toward the condensing part 210a1.

By the compression unit 221, the coolant f2 is moved to the condensing part 210a1 while maintaining a state of high temperature and high pressure, and is condensed by transferring high temperature heat energy to the fluid f1 of the heat transfer part Pt adjacent to the condensing part 210a1.

The fluid f1, which has received high-temperature thermal energy from the heat transfer part Pt, subsequently flows through the fluid pipe 115 and releases high-temperature heat from the heat exchange coil 114 to the inside of the storage body 111.

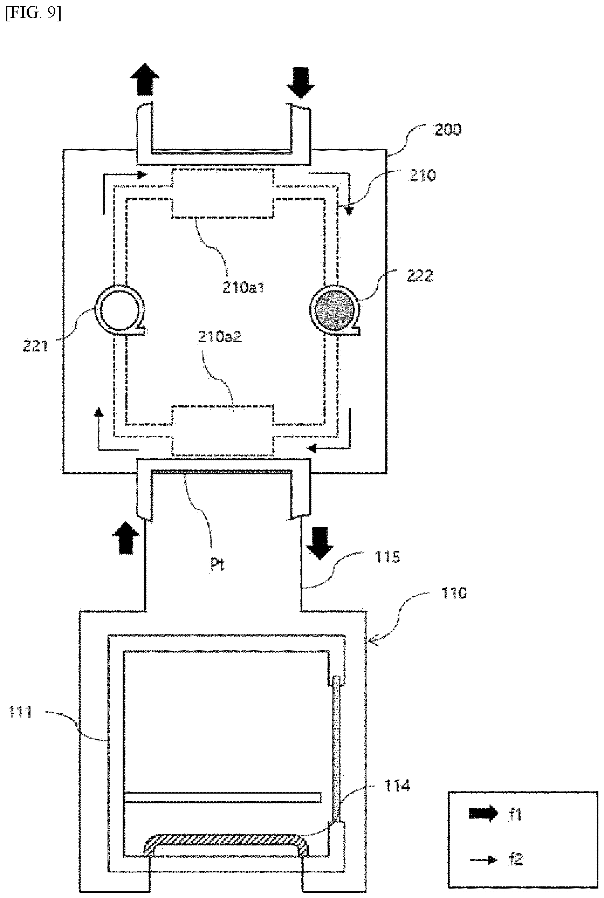

FIG. 9 illustrates a storing part 110 that provides a high temperature environment inside a storage body 111, and a heat pump 200 connected thereto.

The storing part 110 of FIG. 9 is disposed such that the heat transfer part Pt of the fluid pipe 115 is adjacent to the vaporizing part 210a2 of the heat pump 200.

In the case of FIG. 9, the coolant f2 moving in the circulation pipe circulates from the expansion unit 222 towards the vaporizing part 210a2.

By the expansion unit 222, the coolant f2 is moved to the vaporizing part 210a2 while maintaining a state of low temperature and low pressure, and is vaporized by absorbing heat energy from the fluid f1 of the heat transfer part Pt adjacent to the vaporizing part 210a2. The fluid f1 having absorbed the thermal energy is cooled to a low temperature and moves again through the fluid pipe 115 to release low temperature heat from the heat exchange coil 114 to the interior of the storage body 111.

The heat pump 200 of the present disclosure heats the secondary battery by transferring high-temperature thermal energy inside one of the storing parts 110 to heat the secondary battery and cools the secondary battery by transferring low-temperature thermal energy inside the other storing part 110 each time the coolant f2 circulates through the circulation pipe once, as shown in FIGS. 8 and 9.

The battery rack 100 of the present disclosure may be divided into a high temperature aging part 100a and a low temperature aging part 100b.

Specifically, the battery rack 100 is divided into a high temperature aging part 100a, comprising a storing part 110 receiving high temperature heat from the heat pump 200, and a low temperature aging part 100b, comprising a storing part 110 receiving low temperature heat from the heat pump 200.

That is, the storing part 110 of the high temperature aging part 100a provides a high temperature environment for the cell tray T stored therein, and the storing part 110 of the low temperature aging part 100b provides a low temperature environment for the cell tray T stored therein.

Preferably, the high temperature aging part 100a is maintained at 30°C to 80°C, and the low temperature aging part 100b is maintained at 10°C to 26°C.

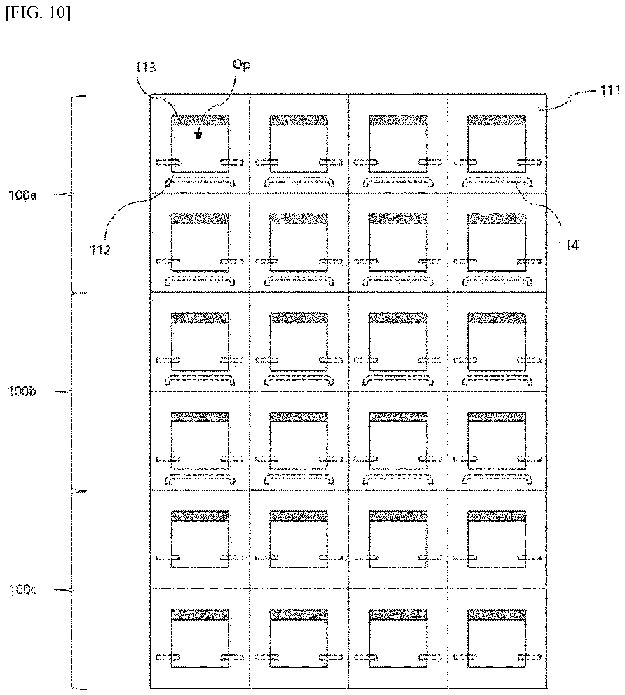

FIG. 10 is a hidden line illustration of a portion of a heat exchange coil 114 concealed by a storage body 111 in a battery rack 100 including the storing part 110 of FIG. 2.

The fluid pipes 115 of the storing part 110 included in the high temperature aging part 100a are all disposed adjacent to the condensing part 210a1 of the heat pump 200.

Furthermore, the fluid pipes 115 of the storing part 110 included in the low temperature aging part 100b are all disposed adjacent to the vaporizing part 210a2 of the heat pump 200.

Since heated air has a lower density than cooled air, for efficient arrangement, the high temperature aging part 100a is located at the upper part of the low temperature aging part 100b, as shown in FIG. 10.

The battery rack 100 included in the secondary battery aging device of the present disclosure may further include a room temperature aging part 100c that provides a room temperature environment of 20 °C to 25 °C for the stored cell tray T.

The room temperature aging part 100c does not transfer any external heat to the cell tray T and allows the secondary batteries stored in the cell tray T to age in a natural state.

Accordingly, the storing part 110 included in the room temperature aging part 100c is not provided with a heat exchange coil 114 as shown in FIG. 10.

The room temperature aging part 100c may be located between the high temperature aging part 100a and the low temperature aging part 100b, or may be located at the lower part of the low temperature aging part 100b as shown.

### (Second embodiment)

The heat exchange coil 114 may be provided on the ceiling of the storage body 111.

FIG. 11 illustrates a storing part 110 included in a secondary battery aging device according to a second embodiment of the present disclosure, wherein a heat exchange coil 114 is provided in the ceiling of the storage body 111.

### (Third embodiment)

The secondary battery aging device according to the third embodiment of the present disclosure applies the structure of the storing part 110 of the secondary battery aging device of both the first and second embodiments, wherein the heat exchange coils 114 are provided on the ceiling and the bottom of the storage body 111, respectively.

FIG. 12 illustrates a storing part 110 included in a secondary battery aging device according to a third embodiment of the present disclosure, wherein the storing part 110 includes dual heat exchange coils 114, as described above, which can reliably provide a high temperature or low temperature environment for the secondary battery in a faster time frame.

### (Fourth embodiment)

The secondary battery aging device of the present disclosure may utilize one heat pump 200 to deliver high and low temperature heat to more storing parts 110. For example, one heat pump 200 may be connected to the entire storing part 110 included in the high temperature aging part 100a and the low temperature aging part 100b.

FIG. 13 illustrates a secondary battery aging device according to a fourth embodiment of the present disclosure.

The fluid pipe 115 included in the secondary battery aging device according to a fourth embodiment may include a main pipe 115a including a heat transfer part Pt, and a plurality of sub-pipes 115b branching from the main pipe 115a and connecting with the heat exchange coil 114.

The fluid f1 containing high-temperature thermal energy heated in the heat transfer part Pt travels through the main pipe 115a disposed adjacent to the condensing part 210a1. Subsequently, the high-temperature fluid f1 flowing through the main pipe 115a is branched by a sub-pipe 115b and moves to a heat exchange coil 114 of each storing part 110 included in the high temperature aging part 100a.

Further, the fluid f1 containing low-temperature thermal energy cooled in the heat transfer part Pt moves through the main pipe 115a disposed adjacent to the vaporizing part 210a2. Subsequently, the low-temperature fluid f1 flowing through the main pipe 115a is branched by a sub-pipe 115b and moves to a heat exchange coil 114 of each storing part 110 included in the low temperature aging part 100b.

In other words, the secondary battery aging device according to the fourth embodiment may utilize a single heat pump 200 to provide a plurality of aging environments more efficiently.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

### [Description of Reference Numerals]

100: BATTERY RACK
100a: HIGH TEMPERATURE AGING PART
100b: LOW TEMPERATURE AGING PART
100c: ROOM TEMPERATURE AGING PART
110: STORING PART
111: STORAGE BODY
112: SUPPORT RIB
113: OPENING/CLOSING DOOR
114: HEAT EXCHANGE COIL
115: FLUID PIPE
115a: MAIN PIPE
115b: SUB-PIPE
116: DUCT
117: VENTILATION FAN
200: HEAT PUMP
210: CIRCULATION PIPE
210a: PHASE TRANSITION PART
210a1: CONDENSING PART
210a2: VAPORIZING PART
220: STATE CHANGE UNIT
221: COMPRESSION UNIT
222: EXPANSION UNIT
Op: OPENING PART
Pt: HEAT TRANSFER PART
T: CELL TRAY
G: GUIDE RAIL
S: STACKER CRANE
C: CARRIAGE
f1: FLUID
f2: COOLANT

## Claims

1. A secondary battery aging device for aging secondary batteries contained in a plurality of cell trays, comprising:
a multilevel battery rack consisting of a plurality of storing parts in which cell trays are stored; and
a heat pump for transferring heat to each cell tray stored in the battery rack, wherein
the heat pump delivers high temperature heat to some of the plurality of storing parts and low temperature heat to other storing parts.

2. The secondary battery aging device of claim 1, wherein
the storing part comprises:
a storage body designed to be open on one side to allow insertion of the cell tray; and
an opening/closing door coupled to the storage body such that the opening part is opened and closed.

3. The secondary battery aging device of claim 2, wherein
the storing part further comprises:
a support rib coupled to an inner surface of the storage body at positions spaced apart from the bottom to support a lower part of the cell tray stored in the storage body.

4. The secondary battery aging device of claim 2, wherein
the storing part further comprises:
a duct, both ends of which is coupled to a rear end of the storage body, respectively; and
a ventilation fan provided within the duct and rotating to induce air circulation in a space within the storage body.

5. The secondary battery aging device of claim 2, wherein
the storing part further comprises:
a heat exchange coil provided in at least one of a ceiling and a floor of the storage body to dissipate heat to a space within the storage body.

6. The secondary battery aging device of claim 5, wherein
a fluid that dissipates heat into the storage body flows within the heat exchange coil.

7. The secondary battery aging device of claim 6, wherein
the heat pump comprises:
a circulation pipe;
a coolant circulating unidirectionally within the circulation pipe; and
a state change unit for compressing or expanding the coolant by being connected to the circulation pipe, wherein
the coolant which undergoes a phase change through the compression and expansion heat-exchanges with the fluid.

8. The secondary battery aging device of claim 7, wherein
the state change unit comprises:
a compression unit connected to the circulation pipe to compress an incoming coolant; and
an expansion unit connected to the circulation pipe to expand the incoming coolant.

9. The secondary battery aging device of claim 8, wherein
the circulation pipe includes a phase transition part where the phase transition of the coolant occurs, wherein
the phase transition part comprises:
a condensing part for condensing coolant brought to a high temperature and high pressure state by the compression unit between the compression unit and the expansion unit, and
a vaporizing part for vaporizing coolant brought to a low temperature and low pressure state by the expansion unit between the compression unit and the expansion unit.

10. The secondary battery aging device of claim 9, wherein
the storing part includes a fluid pipe coupled to the heat exchange coil at both ends to be in communication with the heat exchange coil,
the fluid pipe includes a heat transfer part located adjacent to the phase transition part of the circulation pipe, wherein
the fluid in the fluid pipe is in heat exchange with the coolant in the heat transfer part.

11. The secondary battery aging device of claim 10, wherein
the coolant condenses and dissipates heat into a fluid in the condensing part and absorbs heat from the fluid and vaporizes in the vaporizing part.

12. The secondary battery aging device of claim 10, wherein
the fluid pipe comprises:
a main pipe including the heat transfer part; and
a plurality of sub-pipes branching from the main pipe and connecting with the heat exchange coils.

13. The secondary battery aging device of claim 1, wherein
the battery rack is divided into:
a high temperature aging part comprising a storing part receiving high temperature heat from the heat pump; and
a low temperature aging part comprising a storing part receiving low temperature heat from the heat pump.

14. The secondary battery aging device of claim 13, wherein
the storing part of the high temperature aging part provides a high temperature environment for the cell trays stored inside, and
the storing part of the low temperature aging part provides a low temperature environment for the cell trays stored inside.

15. The secondary battery aging device of claim 13, wherein
the high temperature aging part is located at the upper part of the low temperature aging part.

16. The secondary battery aging device of claim 13, wherein
the battery rack further includes a room temperature aging part that provides a room temperature environment of 20 °C to 25 °C for the stored cell trays.

17. The secondary battery aging device of claim 13, wherein
one heat pump is connected to a pair of storing parts included in the high temperature aging part and the low temperature aging part, respectively.

18. The secondary battery aging device of claim 13, wherein
one heat pump is connected to the entire storing part included in the high temperature aging part and low temperature aging part.

19. The secondary battery aging device of claim 13, wherein
the high temperature aging part is maintained at 30°C to 80°C and the low temperature aging part is maintained at 10°C to 26°C.
